# EUROPEAN PATENT APPLICATION

(11) **EP 0 867 682 A2**
(43) Date of publication of application: **30.09.1998**
(21) Application number: 98105021.4
(22) Date of filing: 19.03.1998
(51) Int. Cl.: F28F 21/08, B23K 1/00

(54) **Al-alloy heat exchanger**

(30) Priority: 25.03.1997 JP 71402/97
(71) Applicant: Mitsubishi Heavy Industries, Ltd., Tokyo (JP)
(72) Inventor: Hayashi, Masateru, c/o Mitsubishi Heavy Ind. Ltd., Nishi-kasugai-gun, Aichi-ken (JP); Ito, Akihiro, c/o Mitsubishi Heavy Ind. Ltd., Nishi-kasugai-gun, Aichi-ken (JP); Sakai, Shigeo, c/o Mitsubishi Heavy Ind. Ltd., Nakamura-ku, Nagoya-shi, Aichi-ken (JP); Matsuo, Shiki, c/o Mitsubishi Heavy Ind. Ltd., Nakamura-ku, Nagoya-shi, Aichi-ken (JP)
(74) Representative: Harrison, Michael Charles

(57) **Abstract**

In an Al-alloy heat exchanger, the core material of brazing sheets constituting tube elements is an Al alloy consisting essentially of 1 to 1.5% by weight of Mn, 0.1 to 0.5% by weight of Cu, 0.05 to 0.2% by weight of Zr, and the balance being Al and impurities; the brazing sheets are formed by cladding both sides or one side of the core material with a brazing filler metal comprising an Al alloy containing at least Si; and an Al-alloy consisting essentially of 0.05 to 0.2% by weight of Zr and the balance being Al and impurities is used as the fin material constituting the air-side fins.

## Description

### FIELD OF THE INVENTION AND RELATED ART STATEMENT

This invention relates to Al-alloy heat exchangers (e.g., stack type heat exchangers) suitable for use in car air-conditioners, truck air-conditioners and the like. More particularly, it relates to Al-alloy heat exchangers each comprising an integral structure made by brazing tube elements composed of Al-alloy brazing sheets clad with a brazing filler metal, and air-side fins formed of an Al-alloy fin material, and can also be applied to heat exchangers made in the same manner as stack type heat exchangers, including heat exchangers for use in automobiles (e.g., evaporators, radiators, heat cores, oil coolers and intercoolers) and heat exchangers for use in various refrigerators.

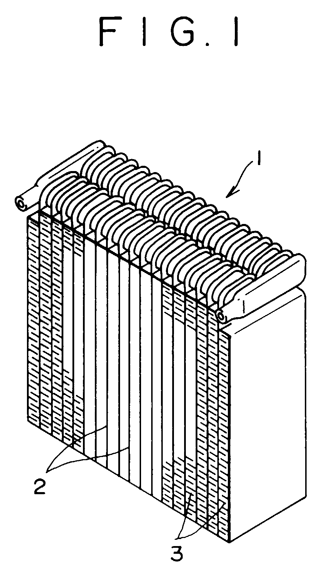

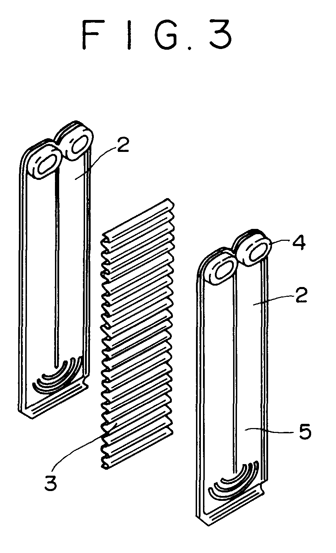

FIG. 1 illustrates an example of a stack type evaporator which has conventionally been used. This stack type evaporator 1 is made by arranging a large number of tube elements 2 in parallel and spaced relationship, interposing an air-side fin (or corrugated fin) 3 between a pair of adjacent tube elements 2,2 so that tube elements 2 and fins 3 are alternately disposed (see FIGs. 1 and 3), and brazing these members in this stacked state.

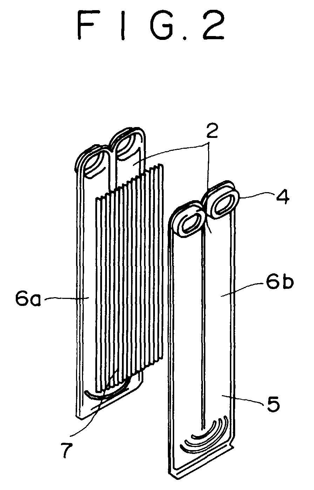

Each of the aforesaid tube elements 2 comprises a pair of brazing sheets (or plates) 6a and 6b which have been joined together by pressing. These brazing sheets 6a and 6b are clad with a covering material comprising a brazing filler metal, and are formed with tank parts 4 and a refrigerant passage 5 as illustrated in FIG. 2. The tube elements 2 so made may or may not have an inner fin 7 incorporated therein as illustrated in FIG. 2.

Conventionally, an Al-Mn alloy or an Al-Mn alloy having Cu or other element added thereto is used as the core material of brazing sheets 6a and 6b, and a brazing filler metal comprising an Al-Si alloy or an Al-Si alloy having Zn added thereto is used as the covering material thereof. Thus, in the prior art, brazing sheets 6a and 6b formed of the aforesaid core material clad with the aforesaid brazing filler metal are used as components of tube elements 2.

On the other hand, an Al-Mn alloy or an Al-Mn alloy having Zn, Sn, In or other element added thereto is frequently used as the material of air-side fins 3.

The choice and combination of these materials are determined in order chiefly to improve corrosion resistance, and it is intended to prevent the leakage of refrigerant through brazing sheets 6a and 6b from being caused by corrosion. Even if only one pit penetrating through brazing sheet 6a or 6b is formed owing to pitting corrosion, a leakage of refrigerant will result. In particular, with the recent tendency to develop brazing sheets 6a and 6b having a lighter weight and a smaller wall thickness in response to a need for a reduction in weight, it has become important to prevent the pitting corrosion of brazing sheets 6a and 6b in the direction of the thickness.

Accordingly, measures to prevent the leakage of refrigerant have conventionally be taken by using various means. Typical examples of such measures include the use of a cathodic protection method in which the corrosion of the brazing sheets is retarded by adding a base metal (e.g., Zn) to the fin material so as to lower its pitting potential, creating a potential difference between the brazing sheets (or plates) and the fins, and causing the fins to act as a sacrificial anode and undergo sacrificial corrosion; the change of the mode of corrosion of the brazing sheets from pitting corrosion to uniform corrosion; and an improvement in the corrosion resistance of the brazing sheets themselves.

Although these measures have conventionally been carried out, they are intended to cope with corrosion (in particular, pitting corrosion) in an area subject to damage from salt, and their purpose have been substantially accomplished. However, the problem of corrosion in an exhaust gas environment and an environment combining an exhaust gas environment with a salt air environment has arisen in recent years. It is pointed out that conventional techniques for coping with corrosion are unsatisfactory to these environments. Specifically, in an environment contaminated with exhaust gas or the like, the resulting low-chlorine water film has low electrical conductivity and does not allow a corrosion prevention current to flow easily. Consequently, the aforesaid cathodic protection method cannot be applied thereto.

The essential difference between the exhaust gas environment and the convention salt air environment lies in the fact that the harmful components in the exhaust gas environment consist essentially of SOₓ and NOₓ, as contrasted strikingly with the conventional salt air environment containing Cl as the main harmful component. In order to accommodate themselves to a market environment in the world, Al-alloy heat exchangers must deal with the aforesaid two types of detrimental environments (i.e., an exhaust gas environment and a salt air environment). To this end, a substantial improvement of various conventional techniques or a new means is required.

Meanwhile, it has conventionally known that, when heat exchangers are made by adding Zn to the brazing filler metal used as the covering material of the brazing sheets and to the fin material and uniting the materials together according to a vacuum brazing process, Zn is evaporated by heating within the vacuum brazing furnace. This not only fails to produce the desired effect, but also brings about a disadvantage in that Zn is deposited on the inner wall of the furnace to cause a reduction in the thermal efficiency of the furnace. Moreover, an operation for removing the Zn deposited on the inner wall of the furnace is required, resulting in an increased operating cost.

### OBJECTS AND SUMMARY OF THE INVENTION

The present invention has been made in view of the above-described existing state of the art. An object of the present invention is to provide an Al-alloy heat exchanger having excellent corrosion resistance in any of a salt air environment, an exhaust gas environment and a salt air/exhaust gas environment. Moreover, another object of the present invention is to provide a technique which, in the fabrication of Al-alloy heat exchangers by vacuum brazing, can prevent an adverse effect from being exerted on the vacuum brazing furnace.

In order to accomplish the above objects, the present invention provides Al-alloy heat exchangers having the following constructions.
(1) In an Al-alloy heat exchanger comprising an integral structure made by brazing tube elements composed of Al-alloy brazing sheets clad with a brazing filler metal, and air-side fins formed of an Al-alloy fin material,
   the core material of the brazing sheets constituting the tube elements is an Al alloy consisting essentially of 1 to 1.5% by weight of Mn, 0.1 to 0.5% by weight of Cu, 0.05 to 0.2% by weight of Zr, and the balance being Al and impurities;
   the brazing sheets are formed by cladding both sides or one side of the core material with a brazing filler metal comprising an Al alloy containing at least Si; and
   an Al-alloy consisting essentially of 0.05 to 0.2% by weight of Zr and the balance being Al and impurities is used as the fin material constituting the air-side fins.
(2) In an Al-alloy heat exchanger comprising an integral structure made by brazing tube elements composed of Al-alloy brazing sheets clad with a brazing filler metal, and air-side fins formed of an Al-alloy fin material, characterized in that:
   the core material of the brazing sheets constituting the tube elements is an Al alloy consisting essentially of 1 to 1.5% by weight of Mn, 0.1 to 0.5% by weight of Cu, 0.05 to 0.2% by weight of Zr, 0.1 to 0.3% by weight of Ti, and the balance being Al and impurities;
   the brazing sheets are formed by cladding both sides or one side of the core material with a brazing filler metal comprising an Al alloy containing at least Si; and
   an Al-alloy consisting essentially of 0.05 to 0.2% by weight of Zr and the balance being Al and impurities is used as the fin material constituting the air-side fins.
(3) Preferably, the contents of Fe and Si in the core material of the aforesaid brazing sheets are both limited to 0.30% by weight or less.
(4) Preferably, 0.5 to 10% by weight of Zn is added to the aforesaid brazing filler metal.
(5) Preferably, in the microstructure of the core material of the aforesaid brazing sheets after brazing, the crystal grains are arranged so as to form a multilayer configuration composed of 5 or more layers in the direction of the thickness of the core material.
(6) Preferably, the pitting potentials of the core material of the aforesaid brazing sheets after brazing and the fin material of the aforesaid air-side fins are made nobler, and the pitting potentials of the fin material of the aforesaid air-side fins, the brazing filler metal on the surfaces of the aforesaid tube elements, and the core material of the aforesaid brazing sheets are controlled so that they increase in that order.
(7) Preferably, the pitting potential difference between the fin material of the aforesaid air-side fins and the brazing filler metal on the surfaces of the aforesaid tube elements, and the pitting potential difference between the brazing filler metal on the surfaces of the aforesaid tube elements and the core material of the aforesaid brazing sheets are both controlled so as to be not less than 20 mV.
(8) Preferably, the pitting potential difference between the core material and the fin material is controlled so as to be not less than 40 mV.

The features of the above-described constructions are described below with respect to each of the components.
〈a〉 The core material of the brazing sheets constituting the tube elements comprises any of the following Al alloys.
   ① An Al alloy prepared by adding Cu and Zr to an Al-Mn alloy as a base material (claim 1).
   ② An Al alloy prepared by adding Cu, Zr and Ti to an Al-Mn alloy as a base material (claim 2).
   ③ An Al alloy as described in ① or ② above wherein, among the impurities contained therein, the contents of Fe and Si are limited so as to be not greater than a specific level (claim 3).
   ④ An Al alloy as described in ①, ② or ③ above wherein the crystal grains in the microstructure thereof are arranged so as to form a desired multilayer configuration composed of 5 or more layers (claim 5).
〈b〉 The brazing filler metal with which the brazing sheets are
   clad comprises any of the following Al alloys.
   ① An Al alloy prepared by adding a specified amount of Zn to an Al-Si alloy as a base material (claim 4).
   ② An Al alloy whose pitting potential after brazing has been controlled so as to be intermediate between the pitting potential of the core material of the brazing sheets and the pitting potential of the fin material of the air-side fins (claim 6).
〈c〉 The fin material of the air-side fins comprises the following Al alloy.
   ① An Al alloy prepared by adding Zr to pure Al as a base material (claims 1 and 2).

Thus, in a preferred embodiment of the present invention, Al-alloy heat exchangers are made by combining tube elements using brazing sheets as defined in 〈a〉 above with air-side fins as defined in 〈c〉 above, and brazing them with a brazing filler metal as defined in 〈b〉 above. Moreover, a pitting potential difference of not less than 40 mV is created between the core material of the brazing sheets and the fin material of the air-side fins. Furthermore, the pitting potentials of the fin material of the air-side fins, the brazing filler metal covering the surfaces of the brazing sheets, and the core material of the brazing sheets are controlled so that they increase in that order, and both the pitting potential difference between the fin material and the brazing filler metal and the pitting potential difference between the brazing filler metal and the core material are controlled so as to be not less than 20 mV. In order to eliminate the adverse effect of Zn on the vacuum brazing furnace used for the fabrication of Al-alloy heat exchangers, the addition of Zn is avoided to the utmost.

### BRIEF DESCRIPTION OF THE DRAWINGS

FIG. 1 is a perspective view of a stack type evaporator which is a kind of Al-alloy heat exchanger;
FIG. 2 is an exploded perspective view of tube elements used in the stack type evaporator of FIG. 1;
FIG. 3 is an exploded perspective view showing a stacked structure comprising tube elements and an air-side fin;
FIG. 4 is a photomicrograph (100x magnification) showing the microstructure of a core material of brazing sheets to which 0.1% by weight of Zr was added; and
FIG. 5 is a photomicrograph (100x magnification) showing the microstructure of a core material of brazing sheets to which 0.1% by weight of Zr and 0.12% by weight of Ti were added.

### DETAILED DESCRIPTION OF PREFERRED EMBODIMENTS

Several embodiments of the present invention will be more specifically described hereinbelow.

In an Al-alloy heat exchanger in accordance with a first embodiment of the present invention, the core material of the brazing sheets is an Al alloy consisting essentially of 1 to 1.5% by weight of Mn, 0.1 to 0.5% by weight of Cu, 0.05 to 0.2% by weight of Zr, and the balance being Al and impurities, and the aforesaid brazing sheets are formed by cladding both sides or one side of this core material with a brazing filler metal comprising an Al alloy containing at least Si. Moreover, an Al-alloy consisting essentially of 0.05 to 0.2% by weight of Zr and the balance being Al and impurities is used as the fin material constituting the aforesaid air-side fins.

In an Al-alloy heat exchanger in accordance with a second embodiment of the present invention, the core material of the brazing sheets is an Al alloy consisting essentially of 1 to 1.5% by weight of Mn, 0.1 to 0.5% by weight of Cu, 0.05 to 0.2% by weight of Zr, 0.1 to 0.3% by weight of Ti, and the balance being Al and impurities, and the aforesaid brazing sheets are formed by cladding both sides or one side of this core material with a brazing filler metal comprising an Al alloy containing at least Si. Moreover, an Al-alloy consisting essentially of 0.05 to 0.2% by weight of Zr and the balance being Al and impurities is used as the fin material constituting the aforesaid air-side fins.

Now, the effects of various components added to the core material of the brazing sheets, the brazing filler metal and the fin material, and the reasons for the definition of their contents are described below.

### [I] Effects of various elements added to the core material of the brazing sheets and reasons for the definition of their contents

### 〈1〉 Effect of Mn addition

If Mn is added to the core material of Al-alloy brazing sheets, it is dispersed into the core material in the form of an Al-Mn compound. Thus, Mn improves strength without reducing corrosion resistance.

### 〈2〉 Reasons for the definition of the Mn content

If the Mn content is greater than 1.5% by weight, a reduction in workability will result. Moreover, a reduction in corrosion resistance will result owing to the occurrence of intergranular corrosion. On the other hand, if it is less than 1% by weight, the above-described effect will not be produced to the fullest extent.

### 〈3〉 Effects of Cu addition

If Cu is added, it dissolves in the matrix (or parent metal) and thereby improves strength. Moreover, Cu makes the electrochemical properties of the core material nobler (i.e., raises the material potential and improves self-corrosion resistance slightly), increases the potential difference from the brazing filler metal, and thereby creates a potential distribution which is effective for the prevention of corrosion.

### 〈4〉 Reasons for the definition of the Cu content

If the Cu content is greater than 0.5% by weight, Cu may precipitate from the matrix (or parent metal), producing the contrary effect of causing a rapid reduction in self-corrosion resistance. Moreover, Cu may diffuse from the core material into the brazing filler metal and may hence be concentrated at the surface of the brazing filler metal and its joints with the fin material or the like, resulting in an increased rate of corrosion. On the other hand, if it is less than 0.1% by weight, the above-described effects will not be produced to the fullest extent.

### 〈5〉 Effects of Zr addition

After brazing, Zr is dispersed in the form of a finely divided intermetallic compound to improve strength. Moreover, Zr reduces the size of crystal grains and changes the mode of corrosion to uniform corrosion, resulting in an improvement in pitting resistance.

### 〈6〉 Reasons for the definition of the Zr content

If the Zr content is greater than 0.2% by weight, a reduction in workability will result. On the other hand, if it is less than 0.05% by weight, the above-described effects will not be produced to the fullest extent.

### 〈7〉 Effects of Ti addition

After brazing, Ti is dispersed in the form of a finely divided intermetallic compound to improve strength. Moreover, Ti is distributed in layers in the direction of the sheet thickness. Thus, the mode of corrosion is changed to uniform corrosion, resulting in an improvement in pitting resistance.

### 〈8〉 Reasons for the definition of the Ti content

If the Ti content is greater than 0.3% by weight, a reduction in workability will result. On the other hand, if it is less than 0.1% by weight, the above-described effects will not be produced to the fullest extent.

### [II] Effects of Zr added to the fin material and reasons for the definition of its content

### 〈1〉 Effects of Zr addition

After brazing, Zr is dispersed in the form of a finely divided intermetallic compound to improve strength. Moreover, Zr produces a flattened microstructure and thereby improves strength, sag resistance and erosion resistance.

### 〈2〉 Reasons for the definition of the Zr content

If the Zr content is greater than 0.2% by weight, a reduction in workability will result. On the other hand, if it is less than 0.05% by weight, the above-described effects will not be produced to the fullest extent.

### [III] Effects of Zn added to the brazing filler metal and reasons for the definition of its content

### 〈1〉 Effects of Zn addition

After brazing, Zn diffuses into the core material and acts as a sacrificial anode. Moreover, a Zn diffusion layer is formed.

### 〈2〉 Reasons for the definition of the Zn content

The reasons why the Zn content has been limited to a range of 0.5-10% by weight are as follows: If the Zn content is greater than 10% by weight, the amount of Zn diffusing into the core material will increase and, on the contrary, cause a reduction in the corrosion resistance of the core material. On the other hand, if it is less than 0.5% by weight, a sufficient potential to allow Zn to act as a sacrificial electrode cannot be secured.

### 〈3〉 Reason for the incorporation of at least Si

The brazing filler metal must melt at a temperature which does not cause the Al parent petal of the same kind to melt. Accordingly, Si is added in order to lower the melting point of the brazing filler metal and increase its fluidity.

Now, several examples in which Al-alloy heat exchangers in accordance with the present invention were made by a vacuum brazing process are given below. In these examples, Al alloys having the compositions shown under Examples 1-4 in Table 1 below were used for the core material of the brazing sheets and the brazing filler metal covering the surfaces of the brazing sheets. Table 1 also shows Comparative Examples 1-5 in which comparative materials having conventional compositions or compositions outside the scope of the present invention were used.

**Table 1**

| Compositions of brazing sheet materials (for use with a vacuum brazing process) | | | | | | | | | |
|---|---|---|---|---|---|---|---|---|---|
| | Component | Si | Fe | Mn | Cu | Mg | Zn | Zr | Ti |
| Example 1 | Brazing filler metal | 9.0 | 0.3 | tr. | tr. | 1.0 | tr. | tr. | tr. |
| | Core material | 0.2 | 0.15 | 1.0 | 0.3 | tr. | tr. | 0.12 | tr. |
| Example 2 | Brazing filler metal | 9.0 | 0.3 | tr. | tr. | 1.0 | tr. | tr. | tr. |
| | Core material | 0.18 | 0.15 | 1.2 | 0.4 | tr. | tr. | 0.09 | tr. |
| Example 3 | Brazing filler metal | 9.0 | 0.3 | tr. | tr. | 1.0 | tr. | tr. | tr. |
| | Core material | 0.14 | 0.17 | 1.1 | 0.2 | tr. | tr. | 0.07 | 0.17 |
| Example 4 | Brazing filler metal | 9.0 | 0.3 | tr. | tr. | 1.0 | tr. | tr. | tr. |
| | Core material | 0.21 | 0.20 | 1.3 | 0.45 | tr. | tr. | 0.11 | 0.11 |
| Comparative Example 1 | Brazing filler metal | 9.0 | 0.3 | tr. | tr. | 1.0 | tr. | tr. | tr. |
| | Core material | 0.25 | 0.28 | 1.1 | 0.05 | tr. | tr. | 0.10 | tr. |
| Comparative Example 2 | Brazing filler metal | 9.0 | 0.3 | tr. | tr. | 1.0 | tr. | tr. | tr. |
| | Core material | 0.27 | 0.31 | 1.2 | 0.6 | tr. | tr. | 0.1 | tr. |
| Comparative Example 3 | Brazing filler metal | 9.0 | 0.3 | tr. | tr. | 1.0 | tr. | tr. | tr. |
| | Core material | 0.21 | 0.27 | 1.4 | 0.3 | tr. | tr. | tr. | tr. |
| Comparative Example 4 | Brazing filler metal | 9.0 | 0.3 | tr. | tr. | 1.0 | tr. | tr. | tr. |
| | Core material | 0.25 | 0.26 | 1.2 | 0.3 | tr. | tr. | tr. | 0.12 |
| Comparative Example 5 | Brazing filler metal | 9.0 | 0.3 | tr. | tr. | 1.0 | tr. | tr. | tr. |
| | Core material | 0.25 | 0.28 | 1.1 | 0.6 | tr. | tr. | 0.08 | 0.13 |
| • 10% of brazing filler metal (or cladding material) on both sides • Sheet thickness: 0.5 mm | | | | | | | | | |

On the other hand, Al alloys having the compositions shown under Examples A and B in Table 2 below were used for the fin material of the air-side fins. Table 2 also shows Comparative Examples A-E.

**Table 2**

| Compositions of fin materials (for use with a vacuum brazing process) | | | | | |
|---|---|---|---|---|---|
| | Mn | Mg | Zn | Zr | Remarks |
| Example A | tr. | tr. | tr. | 0.08 | |
| Example B | tr. | tr. | tr. | 0.16 | |
| Comparative Example A | tr. | tr. | tr. | 0.35 | Cracked during hot rolling |
| Comparative Example B | tr. | 0.5 | tr. | 0.08 | |
| Comparative Example C | 1.1 | tr. | tr. | 0.10 | |
| Comparative Example D | 1.3 | tr. | 1.5 | 0.10 | |
| Comparative Example E | tr. | tr. | tr. | 0.02 | |

The combinations of brazing sheet (or tube element) materials and fin materials used to make Al-alloy heat exchanger samples are shown in Table 3 below. These materials were brazed according to a vacuum brazing process which was carried out under a vacuum of 10⁻⁵ Torr at a temperature of 600°C for 5 minutes.

**Table 3**

| Combinations of materials used in heat exchanger samples (for use with a vacuum brazing process) | |
|---|---|
| Brazing sheet material | Fin material |
| Example 1 | Example A |
| Example 1 | Example B |
| Example 2 | Example A |
| Example 2 | Example B |
| Example 3 | Example A |
| Example 3 | Example B |
| Example 4 | Example A |
| Example 4 | Example B |
| Example 1 | Comparative Example D |
| Example 2 | Comparative Example D |
| Example 3 | Comparative Example D |
| Example 4 | Comparative Example A |
| Example 4 | Comparative Example C |
| Example 4 | Comparative Example D |
| Example 4 | Comparative Example E |
| Comparative Example 1 | Comparative Example D |
| Comparative Example 2 | Comparative Example D |
| Comparative Example 3 | Comparative Example D |
| Comparative Example 4 | Comparative Example D |
| Comparative Example 5 | Comparative Example D |
| [Brazing conditions] • Vacuum brazing process • 10⁻⁵ Torr • 600°C x 5 minutes | |

Next, several examples in which Al-alloy heat exchangers in accordance with the present invention were made by an atmosphere brazing process using a noncorrosive flux are given below. The types and contents of alloying elements in the core materials used in Examples 5-7, together with the types and contents of alloying elements in the core materials used in Comparative Examples 6-9, are shown in Table 4 below. The types and contents of alloying elements in the fin materials used therein were the same as those described in Table 2 above. The combinations of materials used therein are shown in Table 6 which will be given later. These materials were brazed according to an atmosphere brazing process which was carried out in an atmosphere of N₂ gas at a temperature of 605°C for 5 minutes.

**Table 4**

| Compositions of brazing sheet materials (for use with an atmosphere brazing process) | | | | | | | | | | |
|---|---|---|---|---|---|---|---|---|---|---|
| | Component | Si | Fe | Mn | Cu | Mg | Zn | Zr | Ti | Note |
| Example 5 | Brazing filler metal | 9.0 | 0.2 | tr. | tr. | tr. | 1.5 | tr. | tr. | |
| | Core material | 0.2 | 0.15 | 1.0 | 0.3 | tr. | tr. | 0.12 | tr. | |
| Example 6 | Brazing filler metal | 9.0 | 0.2 | tr. | tr. | tr. | 1.5 | tr. | tr. | |
| | Core material | 0.14 | 0.17 | 1.1 | 0.2 | tr. | tr. | 0.07 | 0.17 | |
| Example 7 | Brazing filler metal | 9.0 | 0.25 | tr. | tr. | tr. | 7.5 | tr. | tr. | |
| | Core material | 0.21 | 0.20 | 1.3 | 0.45 | tr. | tr. | 0.11 | 0.11 | |
| Comparative Example 6 | Brazing filler metal | 9.0 | 0.2 | tr. | tr. | tr. | 1.5 | tr. | tr. | |
| | Core material | 0.25 | 0.28 | 1.1 | 0.05 | tr. | tr. | 0.10 | tr. | |
| Comparative Example 7 | Brazing filler metal | 9.0 | 0.2 | tr. | tr. | tr. | 1.5 | tr. | tr. | |
| | Core material | 0.21 | 0.27 | 1.4 | 0.3 | tr. | tr. | tr. | tr. | |
| Comparative Example 8 | Brazing filler metal | 9.0 | 0.3 | tr. | tr. | tr. | 0.2 | tr. | tr. | |
| | Core material | 0.14 | 0.17 | 1.1 | 0.2 | tr. | tr. | 0.07 | 0.17 | |
| Comparative Example 9 | Brazing filler metal | 9.0 | 0.2 | tr. | tr. | tr. | 13.0 | tr. | tr. | Cracked during hot rolling |
| | Core material | 0.14 | 0.17 | 1.1 | 0.2 | tr. | tr. | 0.07 | 0.17 | |
| • 10% of brazing filler metal (or cladding material) on both sides • Sheet thickness: 0.5 mm | | | | | | | | | | |

Al-alloy heat exchanger samples in accordance with the present invention and Al-alloy heat exchanger samples for comparative purposes were made by a vacuum brazing process, and the results of evaluation thereof are shown in Table 5 below. In this case, they were evaluated with respect to brazability and corrosion resistance, and their corrosion resistance was evaluated according to two test methods, i.e., the salt spray test method (SST) and the cycle test method (CCT). The aforesaid SST provides a basis for judgment which is chiefly useful for the evaluation of resistance to damage by salt, while the aforesaid CCT provides a basis for judgment which is chiefly useful for the evaluation of resistance to an exhaust gas environment.

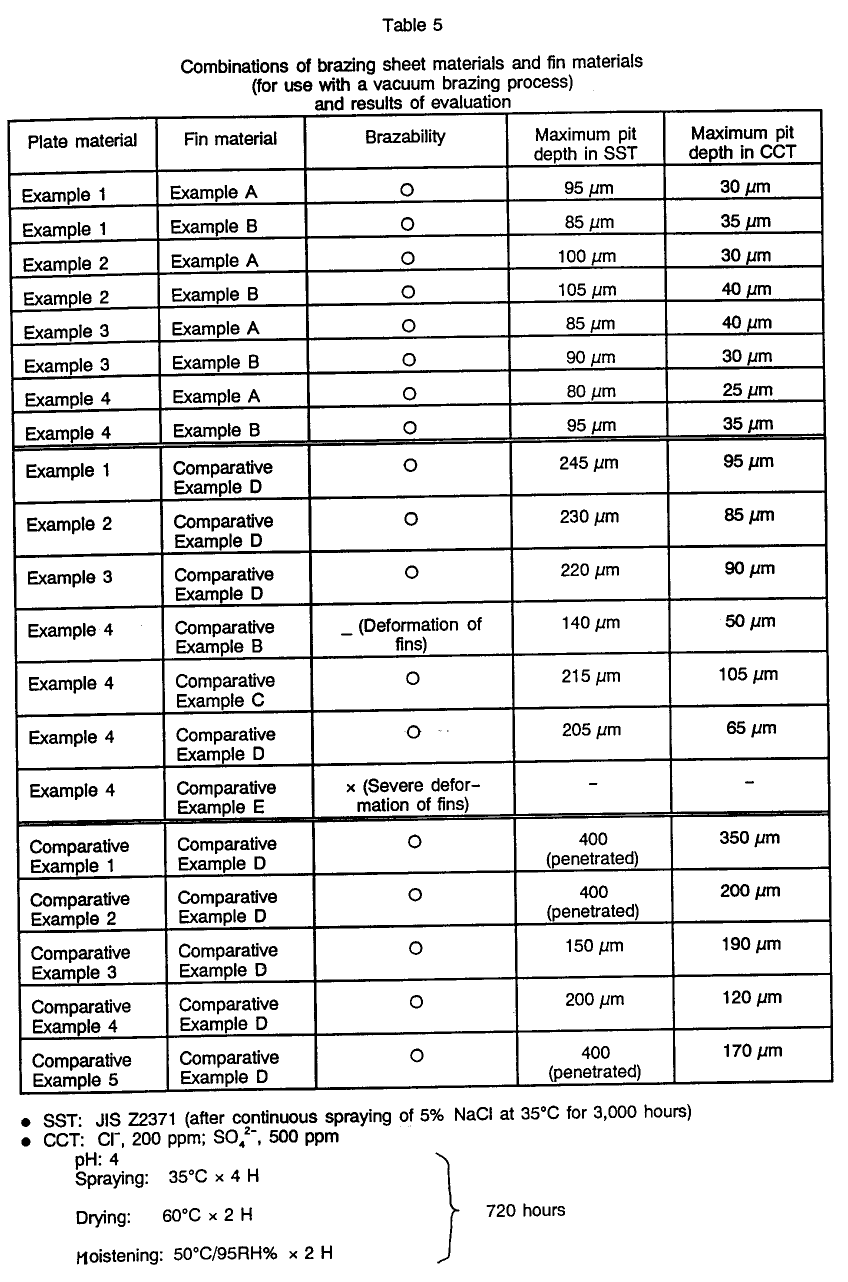

As is evident from the results of evaluation shown in Table 5 above, it is believed that, for all materials of the above-described examples and comparative examples, the brazability is generally satisfactory and hence suitable for practical use. On the other hand, with respect to corrosion resistance, distinct differences are noted according to the combination of materials as shown in Table 5. Specifically, it is confirmed that all samples using the brazing sheet materials of Examples 1-4 have markedly excellent corrosion resistance. Moreover, samples of conventional design using a combination of comparative materials have poor corrosion resistance, though the results may vary slightly according to the combination of materials and the composition of the materials.

When core materials for brazing sheets in accordance with the present invention were used, a distinct improvement in corrosion resistance was noted. Especially when core materials for brazing sheets in accordance with the present invention were used in combination with fin materials in accordance with the present invention, it was recognized that a marked improvement in corrosion resistance was achieved. As a result, it is confirmed that the Al-alloy heat exchangers in accordance with the present invention, which are shown in Table 5, have excellent corrosion resistance against a salt air environment, an exhaust gas environment and a slat air/exhaust gas environment, and against other factors such as adhesion of foreign matter.

Moreover, when a vacuum brazing furnace is used, the disadvantage that the vapor deposition of Zn exerts an adverse effect on the wall surfaces of the vacuum brazing furnace can be avoided because the Zn content is slight (tr.) as shown in Tables 1 and 2 above.

On the other hand, Al-alloy heat exchanger samples in accordance with the present invention and Al-alloy heat exchanger samples for comparative purposes were made by an atmosphere brazing process using a noncorrosive flux, and the results of evaluation thereof are shown in Table 6 below. In this case, it is also confirmed that, similarly to the above-described case in which a vacuum brazing process was used, the combinations of materials in accordance with the present invention bring about a marked improvement in corrosion resistance as compared with the combinations of comparative materials. It is to be understood that, in the case of an atmosphere brazing process using a noncorrosive flux, no adverse effect is produced even at high Zn contents.

**Table 6**

| Combinations of brazing sheet materials and fin materials (for use with an atmosphere brazing process) and results of evaluation | | | | |
|---|---|---|---|---|
| Plate material | Fin material | Brazability | Maximum pit depth in SST | Maximum pit depth in CCT |
| Example 5 | Example A | ○ | 100 µm | 95 µm |
| Example 5 | Example B | ○ | 95 µm | 85 µm |
| Example 6 | Example A | ○ | 110 µm | 65 µm |
| Example 6 | Example B | ○ | 100 µm | 80 µm |
| Example 7 | Example A | ○ | 85 µm | 75 µm |
| Example 7 | Example B | ○ | 95 µm | 60 µm |
| Comparative Example 6 | Comparative Example D | ○ | 350 µm | 180 µm |
| Comparative Example 7 | Comparative Example D | ○ | 215 µm | 220 µm |
| Comparative Example 8 | Comparative Example D | ○ | 245 µm | 175 µm |

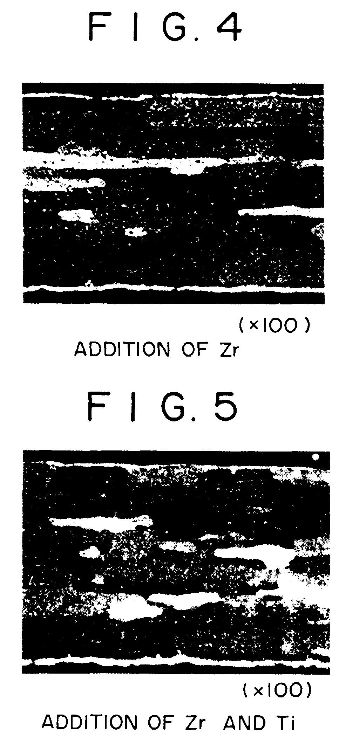

Furthermore, experiments were performed to examine the effects exerted on the microstructure of brazing sheets by the addition of Zr (or Zr and Ti) thereto. Thus, it was confirmed that, when Zr (or Zr and Ti) was added, the microstructure became finer, the crystal grains in the microstructure of the core material of the brazing sheets (or tube elements) after brazing were arranged so as to form a multilayer configuration (composed of at least 5 layers), and the mode of corrosion was changed to uniform corrosion, resulting in an improvement in pitting resistance and strength. FIG. 4 is a photomicrograph (100x magnification) of a core material for brazing sheets to which 0.1% by weight of Zr was added, and FIG. 5 is a photomicrograph (100x magnification) of a core material for brazing sheets to which 0.1% by weight of Zr and 0.12% by weight of Ti were added and which was brazed by the application of heat. The materials of the brazing sheets used for these experiments were as follows:

### ① For the addition of Zr (FIG. 4)

Brazing metal: An Al alloy containing 10.8% by weight of Si and 0.79% by weight of Mg.
Core material of brazing sheet: An Al alloy containing 0.09% by weight of Si, 0.24% by weight of Fe, 0.31% by weight of Cu, and 1.04% by weight of Mn (to which 0.1% by weight of Zr was added).

### ② For the addition of Zr and Ti (FIG. 5)

Brazing metal: An Al alloy containing 10.8% by weight of Si and 0.79% by weight of Mg.
Core material of brazing sheet: An Al alloy containing 0.11% by weight of Si, 0.28% by weight of Fe, 0.34% by weight of Cu, and 1.21% by weight of Mn (to which 0.1% by weight of Zr and 0.12% by weight of Ti were added).

In these experiments, vacuum brazing was carried out under a pressure of 10⁻⁵ Torr at 600°C for 5 minutes.

In FIGS. 4 and 5, the white stripes shown on the outside of the brazing sheet indicate the melted brazing filler metal.

As described above, according to the present invention, the core material of the brazing sheets constituting tube elements comprises an Al alloy prepared by adding Cu and Zr (or Cu, Zr and Ti) to an Al-Mn alloy as a base material, and the fin material constituting air-side fins comprises an Al alloy prepared by adding Zr to Al as a base material, so that excellent corrosion resistance (i.e., pitting resistance and lamellar corrosion resistance) is achieved. Thus, the present invention makes provides Al-alloy heat exchangers which can satisfactorily cope not only with a salt air environment but also with an exhaust gas environment.

Moreover, where a vacuum brazing furnace is used, the adverse effect exerted by the vapor deposition of Zn on the inner walls of the vacuum brazing furnace can be eliminated by minimizing the content of Zn in the fin material and the brazing filler metal. Where Al-alloy heat exchangers are made by an atmosphere (N₂ gas) brazing process using a noncorrosive flux, the above-described adverse effect is not produced. Accordingly, a high degree of pitting resistance due to Zn diffusion can be achieved by adding 0.5 to 10% by weight of Zn to the brazing filler metal.

According to another feature of the present invention, a further improvement in corrosion resistance can be achieved by limiting the contents of Fe and Si in the core material of the brazing sheets to 0.30% by weight or less. The reasons for the limitation of these contents are as follows: If Fe precipitates from the matrix (or parent metal), it causes a rise in potential and forms a starting point for the occurrence of corrosion. Accordingly, the content of Fe is limited to 0.30% by weight or less. Similarly, Si also tends to precipitate and forms a starting point for the occurrence of corrosion. Accordingly, the content of Si is limited to 0.30% by weight or less. In order to improve corrosion resistance, it is more preferable that the contents of Fe and Si be limited to 0.25% by weight or less.

According to still another feature of the present invention, a pitting potential difference of not less than 40 mV is created between the core material of the brazing sheets and the fin material of the air-side fins. Moreover, the pitting potentials of the fin material of the air-side fins, the brazing filler metal covering the surfaces of the brazing sheets, and the core material of the brazing sheets are controlled so that they increase in that order, and both the pitting potential difference between the fin material and the brazing filler metal and the pitting potential difference between the brazing filler metal and the core material are controlled so as to be not less than 20 mV. Thus, a still further improvement in corrosion resistance can be achieved.

While the present invention has been described above with reference to several specific embodiments, it is to be understood that the present invention not limited to these embodiments, but various changes and modifications may be made on the basis of the technical concept of the present invention. For examples, the present invention can also be applied to heat exchangers made in the same manner as the above-described stack type evaporators, including heat exchangers for use in automobiles (e.g., radiators, heat cores, oil coolers and intercoolers) and heat exchangers for use in various refrigerators.

As described above, the present invention provides practically useful Al-alloy heat exchangers which have excellent corrosion resistance (in particular, pitting resistance) and which can satisfactorily cope with both a salt air environment and an exhaust gas environment. Moreover, where a vacuum brazing furnace is used for the fabrication of Al-alloy heat exchangers, an adverse effect such as the vapor deposition of Zn on the inner walls of the furnace can be prevented by minimizing the content of Zn.

## Claims

1. An Al-alloy heat exchanger comprising an integral structure made by brazing tube elements composed of Al-alloy brazing sheets clad with a brazing filler metal, and air-side fins formed of an Al-alloy fin material, characterized in that:
the core material of said brazing sheets constituting said tube elements is an Al alloy consisting essentially of 1 to 1.5% by weight of Mn, 0.1 to 0.5% by weight of Cu, 0.05 to 0.2% by weight of Zr, and the balance being Al and impurities;
said brazing sheets are formed by cladding both sides or one side of said core material with a brazing filler metal comprising an Al alloy containing at least Si; and
an Al-alloy consisting essentially of 0.05 to 0.2% by weight of Zr and the balance being Al and impurities is used as the fin material constituting said air-side fins.

2. An Al-alloy heat exchanger comprising an integral structure made by brazing tube elements composed of Al-alloy brazing sheets clad with a brazing filler metal, and air-side fins formed of an Al-alloy fin material, characterized in that:
the core material of said brazing sheets constituting said tube elements is an Al alloy consisting essentially of 1 to 1.5% by weight of Mn, 0.1 to 0.5% by weight of Cu, 0.05 to 0.2% by weight of Zr, 0.1 to 0.3% by weight of Ti, and the balance being Al and impurities;
said brazing sheets are formed by cladding both sides or one side of said core material with a brazing filler metal comprising an Al alloy containing at least Si; and
an Al-alloy consisting essentially of 0.05 to 0.2% by weight of Zr and the balance being Al and impurities is used as the fin material constituting said air-side fins.

3. An Al-alloy heat exchanger as claimed in claim 1 or 2 wherein the contents of Fe and Si in the core material of said brazing sheets are both limited to 0.30% by weight or less.

4. An Al-alloy heat exchanger as claimed in any one of claims 1 to 3 wherein 0.5 to 10% by weight of Zn is added to said brazing filler metal.

5. An Al-alloy heat exchanger as claimed in any one of claims 1 to 4 wherein, in the microstructure of the core material of said brazing sheets after brazing, the crystal grains are arranged so as to form a multilayer configuration composed of 5 or more layers in the direction of the thickness of the core material.

6. An Al-alloy heat exchanger as claimed in any one of claims 1 to 3 wherein the pitting potentials of the core material of said brazing sheets after brazing and the fin material of said air-side fins are made nobler, and the pitting potentials of the fin material of said air-side fins, the brazing filler metal on the surfaces of said tube elements, and the core material of said brazing sheets are controlled so that they increase in that order.

7. An Al-alloy heat exchanger as claimed in claim 6 wherein the pitting potential difference between the fin material of said air-side fins and the brazing filler metal on the surfaces of said tube elements, and the pitting potential difference between the brazing filler metal on the surfaces of said tube elements and the core material of said brazing sheets are both controlled so as to be not less than 20 mV.

8. An Al-alloy heat exchanger as claimed in claim 7 wherein the pitting potential difference between said core material and said fin material is controlled so as to be not less than 40 mV.
